# FASCICULE DE BREVET EUROPEEN

(11) **EP 1 867 841 B1**
(45) Date de publication et mention de la délivrance du brevet: **31.03.2010**
(21) Numéro de dépôt: 07110288.3
(22) Date de dépôt: 14.06.2007
(51) Int. Cl.: F01D 17/16, F02C 9/20, F04D 29/56

(54) **Stator de turbomachine comportant un etage d'aubes de redresseurs actionnees par une couronne rotative a centrage automatique**
Stator einer Strömungsmaschine, der eine Stufe mit Leitschaufeln umfasst, die von einem Drehzahnkranz mit automatischer Zentrierung angetrieben werden
Turbomachine stator comprising a stage of adjustable vanes activated by a unison ring with automatic centring

(30) Priorité: 16.06.2006 FR 0652528
(43) Date de publication de la demande: 19.12.2007
(73) Titulaire: SNECMA, 75015 Paris (FR)
(72) Inventeur: BOURU, Michel, 77950, MONTEREAU SUR LE JARD (FR)
(74) Mandataire: Besnard, Christophe Laurent

(56) Documents cités:
- EP-A- 1 672 180
- EP-A2- 0 909 880
- US-A- 4 130 375

## Description

L'invention se rapporte à un stator de turbomachine.

L'invention s'applique aux turbomachines terrestres ou aéronautiques, notamment aux turboréacteurs d'avion et, plus particulièrement, au compresseur que comporte de telles turbomachines.

Plus précisément, l'invention concerne une turbomachine du type comprenant un stator comportant un carter et au moins un étage d'aubes de redresseur à calage variable lesdites aubes étant déplacées par une couronne d'actionnement extérieure audit carter et portée par celui-ci, cette couronne étant liée par des biellettes aux aubes dudit étage pour les actionner simultanément.

Dans une turbomachine de ce type, le stator du compresseur est équipé d'au moins un étage d'aubes de redresseur dites à calage variable car leur position dans la veine est ajustable. Plus précisément, l'angle d'attaque des aubes peut être contrôlé, en fonction des conditions de fonctionnement de la turbomachine, par un système d'asservissement qui commande le déplacement d'une couronne d'actionnement rotative, extérieure au carter et reliée auxdites aubes par des biellettes respectives.

Classiquement, une telle couronne d'actionnement comporte des patins de centrage réglables radialement, par lesquels elle est positionnée autour du carter, en application sur celui-ci. Chaque patin de centrage s'applique sur une piste du carter, c'est-à-dire sur un bossage défini à la surface de celui-ci, les bossages étant usinés pour que leurs surfaces de contact s'inscrivent sur une surface cylindrique dont l'axe coïncide avec celui de la turbomachine.

Les réglages des patins permettant d'assurer une coaxialité satisfaisante de la couronne et du carter sont difficiles et requièrent du temps. De plus, une fois ces réglages effectués, il faut redonner du jeu à l'assemblage coulissant, entre les patins et les bossages, pour tenir compte des phénomènes de dilatation qui interviennent en fonctionnement et qui impliquent des évolutions de dimensions distinctes pour la couronne et le carter. La couronne et le carter ont, en effet, des coefficients de dilatation différents et sont, en outre, exposés à des températures différentes en fonctionnement. Ce jeu fonctionnel nécessaire, qui peut atteindre 0,7 à 0,8 mm, va à l'encontre du centrage souhaité. A froid, ce jeu fonctionnel est maximum et le décentrage de la couronne est donc maximum.

Selon une autre conception, le brevet US 4 130 375 décrit une couronne d'actionnement à déplacement simplement circulaire, composée de deux anneaux superposés. L'anneau intérieur est monté sur le carter au moyen de plots s'étendant radialement et l'anneau extérieur, rattaché à des biellettes d'actionnement des aubes, roule sur l'anneau intérieur grâce à des galets. Un tel système est lourd et encombrant.

L'invention apporte une amélioration notable en comparaison des solutions antérieures mentionnées ci-dessus en permettant, en fonctionnement, un centrage automatique de la couronne à l'aide d'un système assez peu encombrant.

Plus précisément, l'invention concerne un stator de turbomachine du type précité, caractérisé en ce que ledit carter comporte un rail coaxial, fixe, faisant saillie sur la surface externe du carter, en ce qu'au moins trois groupes de galets espacés circonférentiellement sont assujettis à se déplacer le long dudit rail, en ce que chaque groupe de galets est couplé à ladite couronne par un agencement de guidage radial (i.e. chaque groupe de galets est guidé radialement par rapport à la couronne), et en ce que chaque groupe de galets comprend au moins deux galets engagés avec ledit rail, chaque galet étant monté en rotation sur un axe radial, cet axe étant monté directement sur ladite couronne.

Le fait que l'axe soit monté directement sur la couronne signifie que cet axe n'est pas monté sur un support, lui-même monté sur la couronne. Deux configurations peuvent ainsi être envisagées.

Selon une première configuration, chaque galet coulisse radialement sur son axe, cet axe étant fixé sur ladite couronne. L'axe peut être monté fixement sur la couronne, voire former une seule pièce avec celle-ci.

Selon une deuxième configuration, chaque galet est solidaire de son axe et cet axe est monté coulissant dans un alésage ménagé dans la couronne, de sorte que le galet et l'axe coulissent ensemble radialement par rapport à la couronne. En d'autres termes, l'axe est mobile en translation radiale par rapport à la couronne tandis que le galet est mobile uniquement en rotation (et pas en translation) par rapport à l'axe.

Avantageusement, pour faciliter le coulissement de l'axe dans l'alésage, on prévoit, entre l'alésage et l'axe, un palier lisse ou un palier à roulement.

La structure conforme à l'invention permet d'obtenir une couronne d'actionnement de faible masse, parfaitement centrée (i.e. coaxiale avec le carter). De plus, le montage et le réglage d'une telle structure sont simples et rapides. Enfin, il n'est pas nécessaire de prévoir un jeu fonctionnel tenant compte des phénomènes de dilatation, ce qui garantit un bon centrage de la couronne quelle que soit la température de fonctionnement et, notamment, à froid.

La structure conforme à l'invention garantit en permanence la qualité initiale du centrage, quelle que soit la température de fonctionnement et quels que soient les matériaux utilisés pour la couronne et le carter. On améliore aussi la maîtrise de la position de la couronne d'entraînement dans toutes les phases de la commande.

Le système proposé se satisfait de trois (minimum) ou quatre groupes de galets, sensiblement équidistants les uns des autres, circonférentiellement.

Pour faire tourner la couronne d'actionnement, on manoeuvre généralement celle-ci à l'aide de vérins de commande, en un ou deux points de sa périphérie. Grâce à l'invention, les efforts de manoeuvre sont diminués de la part imputable aux frottements entre les patins de centrage et les bossages de l'art antérieur, qui représentait environ 30 % de l'effort global de manoeuvre. Le gain obtenu peut se répercuter sur le dimensionnement du ou des vérins de commande ou de tout autre dispositif de commande.

Par rapport au système décrit dans le brevet US 4 130 375 précité, on notera que la masse et les dimensions de la couronne d'actionnement sont fortement réduites puisque l'anneau intérieur du système décrit dans ce brevet est supprimé.

Selon une variante possible, ledit rail est composé de deux anneaux parallèles solidaires du carter et lesdits au moins deux galets de chaque groupe de galets viennent respectivement au contact des deux anneaux. Chaque groupe de galets comprend généralement plus de deux galets et ceux-ci sont repartis le plus également possible entre les anneaux.

Par exemple, les deux anneaux sont pourvus de nervures latérales en vis-à-vis et les groupes de galets comportent des galets, par exemple de forme biconique, en engagement avec lesdites nervures latérales.

Selon une autre variante, ledit rail est composé d'un unique anneau solidaire dudit carter et les galets de chaque groupe de galets viennent au contact de cet anneau, de part et d'autre de celui-ci.

Comme mentionné précédemment, pour faire tourner la couronne d'actionnement, on manoeuvre généralement celle-ci en un ou deux points de sa périphérie. Or, le pivotement des aubes à calage variable dans leur logement se fait avec des frottements qui créent une résistance au mouvement. Cette résistance se répercute au niveau des biellettes et, dans certains cas, provoque une déformation elliptique de la couronne qui s'accompagne d'un (léger) désalignement des axes avec la direction radiale. Pour résoudre ce problème supplémentaire, on peut jouer sur la section de la couronne de manière à augmenter sa rigidité (sa résistance à la déformation) et/ou jouer sur la nature du matériau constitutif de cette couronne et privilégier des matériaux ayant une rigidité élevée. C'est le cas, notamment, de certains matériaux composites à base de fibres de carbone.

L'invention s'applique aussi à une turbomachine munie d'un tel stator, notamment un compresseur.

L'invention sera mieux comprise et d'autres avantages de celle-ci apparaîtront plus clairement à la lumière de la description qui suit d'un exemple de réalisation de l'invention. Cette description est faite en référence aux planches de figures annexées, sur lesquelles :
- la figure 1 est une vue suivant une section d'un carter, perpendiculairement à l'axe de la turbomachine, montrant le montage d'une couronne d'actionnement autour dudit carter ;
- la figure 2 est une vue de côté en perspective d'une partie de la couronne et du carter de la figure 1 ;

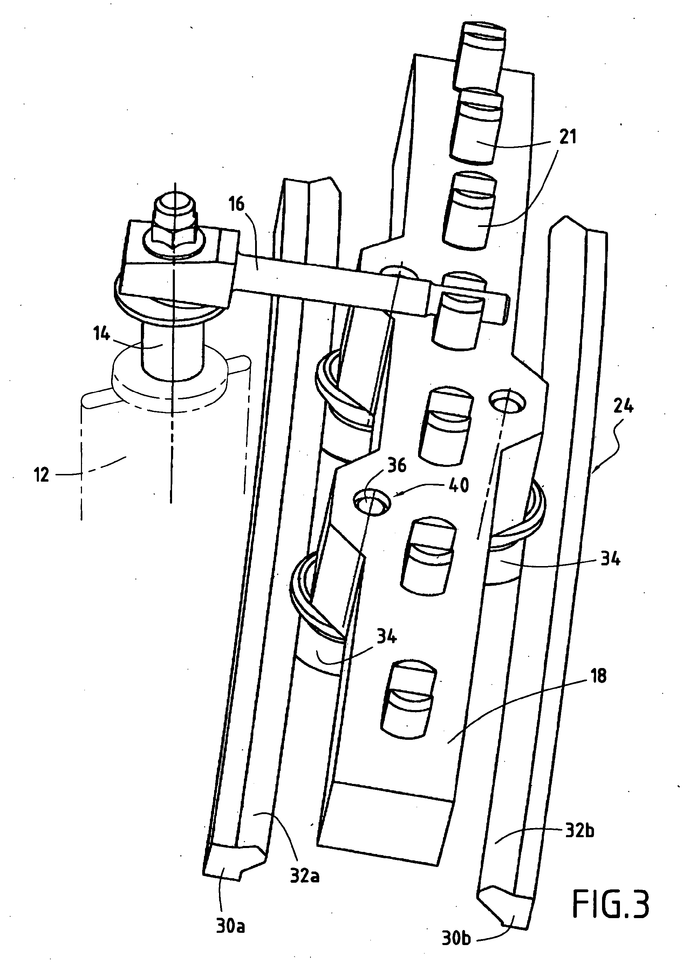

- la figure 3 est une vue de dessus en perspective d'une partie de la couronne et du carter de la figure 1 ;

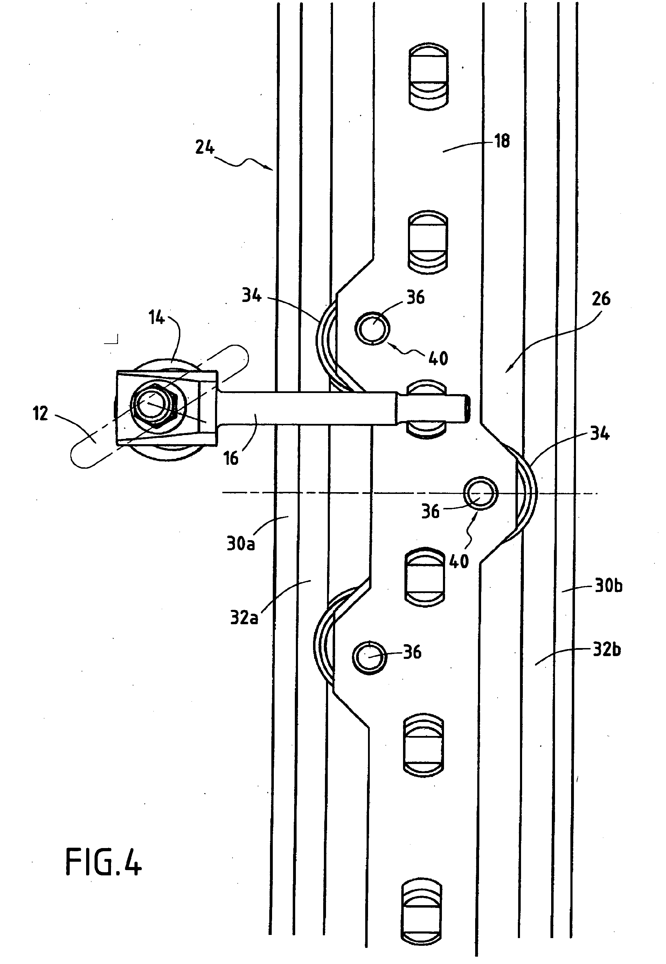

- la figure 4 est une vue de dessus (de l'extérieur de la couronne vers l'intérieur) d'une partie de la couronne et du carter de la figure 1 ; et

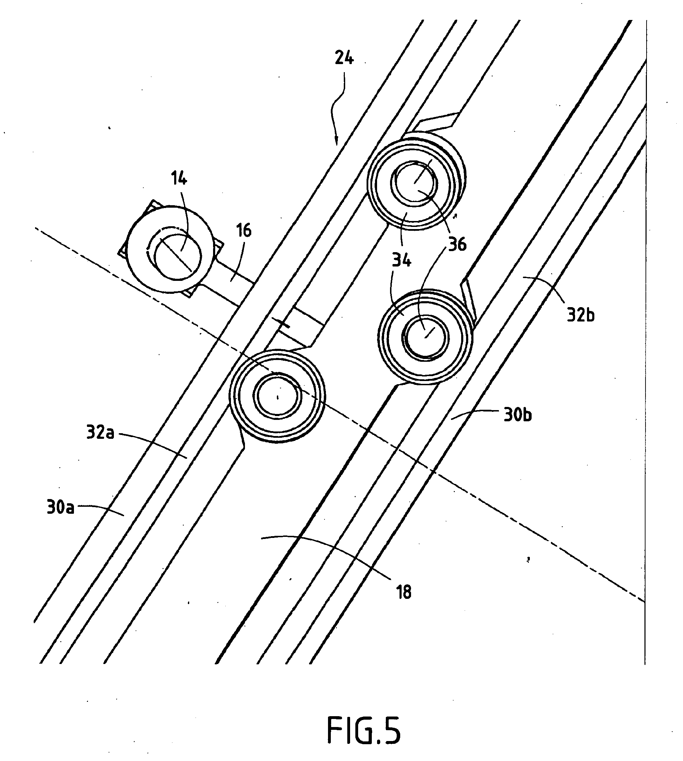

- la figure 5 est une vue de dessous (de l'intérieur de la couronne vers l'extérieur) d'une partie de la couronne et du carter de la figure 1.

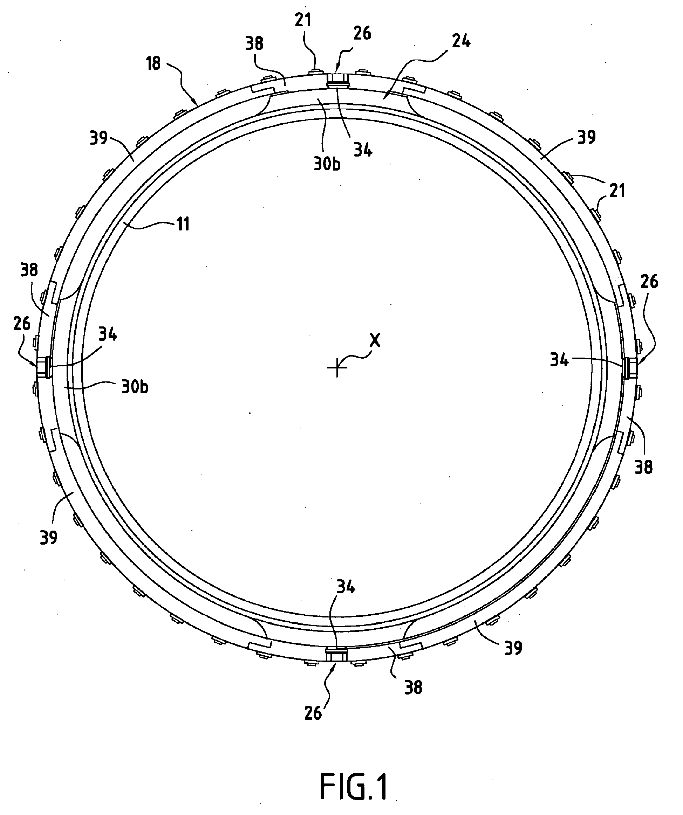

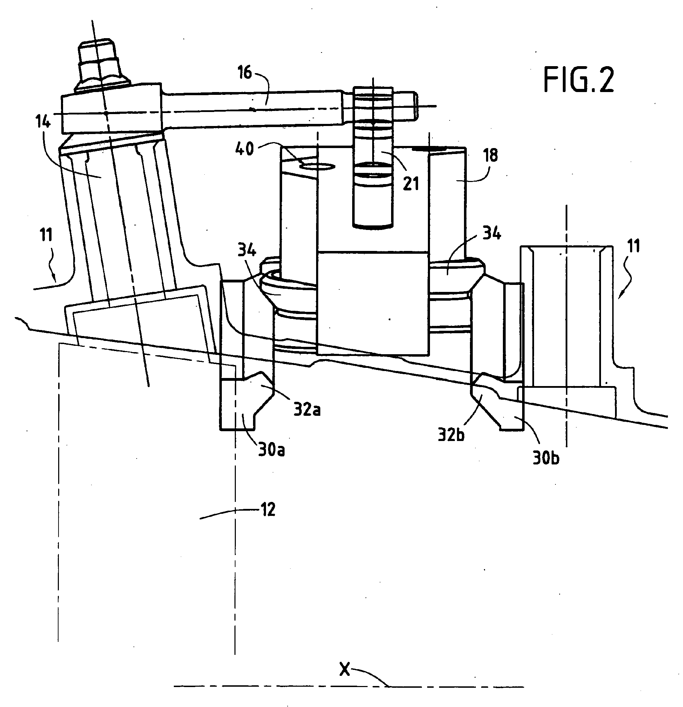

Les figures 1 et 2 représentent en partie un carter 11 d'une turbomachine d'axe X, qui abrite des aubes 12 de redresseurs à calage variable. Chaque aube 12 comporte un pivot 14 faisant saillie du carter 11, relié par une biellette 16 à une couronne d'actionnement 18 extérieure au carter. La couronne 18 présente sur sa surface extérieure des tenons 21 solidaires des extrémités des biellettes 16. On comprend que la rotation de la couronne d'actionnement, autour de l'axe X, fait pivoter simultanément les aubes 12 d'une même valeur. Dans le cas d'un turboréacteur d'avion, l'orientation des aubes peut être ajustée en fonction des conditions de vol.

L'invention permet de garantir le centrage de la couronne d'actionnement 18, ce centrage n'étant pas perturbé par les différences de dilatation entre le carter 11 et la couronne 18.

Pour ce faire, le carter 11 comporte, extérieurement, un rail annulaire coaxial 24 fixe, ici d'un seul tenant avec la paroi du carter et faisant saillie de sa surface extérieure. Au moins trois groupes de galets 26 espacés circonférentiellement et de préférence sensiblement équidistants les uns des autres, sont assujettis à se déplacer le long de ce rail 24. Ce dernier n'est matérialisé dans sa totalité que sur les tronçons où il est fonctionnellement utile, c'est-à-dire le long des trajets des groupes de galets 26 (voir fig. 1). Le rail est arasé sur les autres tronçons, ce qui représente un gain de poids appréciable et facilite la mise en place des groupes de galets. En outre, comme on le verra plus loin, chaque groupe de galets 26 est couplé à la couronne 18 par un agencement de guidage radial (i.e. chaque groupe de galets est guidé radialement par rapport à la couronne) assurant un centrage automatique parfait de la couronne 18 par rapport à l'axe X de la turbomachine. Dans l'exemple, on a prévu quatre groupes de galets 26 régulièrement espacés à 90° les uns des autres.

Dans l'exemple des figures, la couronne 18 est composée de l'assemblage de plusieurs tronçons courbes 38, 39 munis de méplats à leurs extrémités et fixés bout à bout, par exemple par sertissage ou boulonnage, pour reconstituer une structure annulaire (voir fig. 1). Les tronçons 38 sont ceux qui portent les groupes de galets 26.

Dans l'exemple présentement décrit, le rail 24 est composé de deux anneaux 30a, 30b parallèles solidaires du carter (en fait des tronçons d'anneaux) et les groupes de galets 26 sont conformés pour se déplacer entre ces anneaux, plus précisément entre ces tronçons d'anneaux, respectivement. De plus, les deux anneaux 30a, 30b sont pourvus de nervures latérales 32a, 32b en vis-à-vis et les groupes de galets 26 comportent des galets biconiques 34 en engagement roulant avec ces nervures latérales.

Dans l'exemple représenté, chaque groupe de galets 26 comporte trois galets biconiques 34, chaque galet étant monté en rotation sur un axe 36. Les trois galets forment entre eux un triangle isocèle. Un des galets 34 est en engagement avec un des anneaux 30a, et les deux autres galets 34 sont en engagement avec l'autre anneau 30b. Pour permettre la rotation des galets, un système à roulements est intercalé entre chaque galet 34 et son axe 36. Les galets 34 ne peuvent pas coulisser le long des axes 36.

Selon un autre exemple de réalisation, non représenté, les axes 36 font partie intégrante de la couronne 18.

Dans l'exemple représenté, les axes 36 sont montés coulissant dans des alésages 40 de forme complémentaire, ménagés dans la couronne 18. Ces alésages 40 sont orientés radialement, de sorte que les axes 36 sont orientés radialement et coulissent radialement par rapport à la couronne 18.

Pour faciliter le coulissement de chaque axe 36 dans son alésage 40 on prévoit entre l'alésage et l'axe un palier lisse ou un palier à roulements.

Comme palier à roulements, on utilise avantageusement une bague à recirculartion de billes. On pourrait également utiliser une cage à bille montée sur un système d'amortisseurs autorisant un déplacement radial de cette cage à bille.

Comme palier lisse, on utilise avantageusement une douille disposée entre l'alésage et l'axe. On pourrait également utiliser un revêtement déposé sur la surface de l'alésage et/ou sur la surface de l'axe. Bien entendu, le matériau de la douille et/ou du revêtement est choisi pour son faible coefficient de frottement.

Généralement, lorsque la température augmente en fonctionnement, la dilatation du carter 11 est supérieure à celle de la couronne 18 et le diamètre des anneaux 30a et 30b augmente plus rapidement que celui de la couronne 18. Grâce à l'invention, les anneaux 30a, 30b entraînent avec eux les galets 34 et les axes 36, qui coulissent alors à l'intérieur des alésages 40 en direction de l'extérieur de la couronne. Ainsi, la couronne 18 qui était centrée avant la dilatation, le reste pendant et après la dilatation.

## Revendications

1. Stator de turbomachine comportant un carter (11) et au moins un étage d'aubes (12) de redresseur à calage variable, lesdites aubes étant déplacées par une couronne d'actionnement (18) extérieure audit carter et portée par celui-ci et ladite couronne étant liée par des biellettes (16) aux aubes (12) pour les actionner simultanément, **caractérisé en ce que** ledit carter (11) comporte un rail (24) coaxial, fixe, faisant saillie sur la surface externe du carter, **en ce qu'**au moins trois groupes de galets (26) espacés circonférentiellement sont assujettis à se déplacer le long dudit rail, **en ce que** chaque groupe de galets (26) est couplé à ladite couronne (18) par un agencement de guidage radial, et **en ce que** chaque groupe de galets (26) comprend au moins deux galets (34) engagés avec ledit rail (24), chaque galet (34) étant monté en rotation sur un axe (36) orienté radialement, chaque galet coulissant radialement sur son axe, cet axe étant fixé sur la couronne.

2. Stator de turbomachine comportant un carter (11) et au moins un étage d'aubes (12) de redresseur à calage variable, lesdites aubes étant déplacées par une couronne d'actionnement (18) extérieure audit carter et portée par celui-ci et ladite couronne étant liée par des biellettes (16) aux aubes (12) pour les actionner simultanément, **caractérisé en ce que** ledit carter (11) comporte un rail (24) coaxial, fixe, faisant saillie sur la surface externe du carter, **en ce qu'**au moins trois groupes de galets (26) espacés circonférentiellement sont assujettis à se déplacer le long dudit rail, **en ce que** chaque groupe de galets (26) est couplé à ladite couronne (18) par un agencement de guidage radial, et **en ce que** chaque groupe de galets (26) comprend au moins deux galets (34) engagés avec ledit rail (24), chaque galet étant monté en rotation sur un axe (36) orienté radialement et chaque galet (34) étant solidaire de son axe (36), cet axe étant monté coulissant dans un alésage (40) ménagé dans la couronne (18), de sorte que le galet et l'axe coulissent ensemble radialement par rapport à la couronne.

3. Stator selon la revendication 2, dans lequel un palier lisse est prévu entre ledit alésage (40) et ledit axe (36) pour faciliter le coulissement de l'axe.

4. Stator selon la revendication 2, dans lequel un palier à roulement est prévu entre ledit alésage (40) et ledit axe (36) pour faciliter le coulissement de l'axe.

5. Stator selon l'une quelconque des revendications 1 à 4, dans lequel un système à roulements est intercalé entre chaque galet (34) et son axe (36).

6. Stator selon l'une quelconque des revendications 1 à 5, dans lequel ledit rail (24) est composé de deux anneaux parallèles (30a, 30b) solidaires du carter (11) et dans lequel lesdits au moins deux galets (34) de chaque groupe de galets (26) viennent respectivement au contact des deux anneaux.

7. Stator selon la revendication 6, dans lequel les deux anneaux (30a, 30b) sont pourvus de nervures latérales (32a, 32b) en vis-à-vis et dans lequel lesdits groupes de galets (26) comportent des galets biconiques (34) en engagement avec lesdites nervures latérales.

8. Stator selon l'une quelconque des revendications 1 à 7, dans lequel ledit rail (24) est composé d'un unique anneau solidaire dudit carter (11) et dans lequel les galets de chaque groupe de galets viennent au contact dudit anneau, de part et d'autre de celui-ci.

9. Stator selon l'une quelconque des revendications 1 à 8, dans lequel ladite couronne (18) d'actionnement est réalisée en matériau composite à base de fibres de carbone.

10. Compresseur comportant un stator selon l'une quelconque des revendications 1 à 9.

11. Turbomachine comportant un stator selon l'une quelconque des revendications 1 à 9.

## Claims

1. A turbomachine stator comprising a casing (11) and at least one stage of variable-pitch stator vanes (12), said vanes being moved by an actuator ring (18) outside said casing and carried thereby, and said ring being connected by links (16) to the vanes (12) in order to actuate them simultaneously, the stator being **characterized in that** said casing (11) includes a stationary coaxial rail (24) projecting from the outside surface of the casing, **in that** at least three circumferentially spaced-apart groups of wheels (26) are constrained to move along said rail, **in that** each group of wheels (26) is coupled to said ring (18) by a radial guidance arrangement, and **in that** each group of wheels (26) comprises at least two wheels (34) engaged with said rail (24), each wheel (34) being mounted to rotate on a radially-oriented pin (36), each wheel sliding radially on its pin, said pin being fixed to the ring.

2. A turbomachine stator comprising a casing (11) and at least one stage of variable-pitch stator vanes (12), said vanes being moved by an actuator ring (18) outside said casing and carried thereby, and said ring being connected by links (16) to the vanes (12) in order to actuate them simultaneously, the stator being **characterized in that** said casing (11) includes a stationary coaxial rail (24) projecting from the outside surface of the casing, **in that** at least three circumferentially spaced-apart groups of wheels (26) are constrained to move along said rail, **in that** each group of wheels (26) is coupled to said ring (18) by a radial guidance arrangement, and **in that** each group of wheels (26) comprises at least two wheels (34) engaged with said rail (24), each wheel (34) being mounted to rotate on a radially-oriented pin (36), and each wheel (34) being secured to its pin (36), the pin being slidably mounted in a bore (40) formed in the ring (18) so that the wheel and the pin slide together radially relative to the ring.

3. A stator according to claim 2, in which a smooth bearing is provided between said bore (40) and said pin (36) to facilitate sliding of the pin.

4. A stator according to claim 2, in which a rolling bearing is provided between said bore (40) and said pin (36) to facilitate sliding of the pin.

5. A stator according to any one of claims 1 to 4, in which a rolling system is interposed between each wheel (34) and its pin (36).

6. A stator according to any one of claims 1 to 5, in which said rail (24) is made up of two parallel rings (30a, 30b) secured to the casing (11) and in which said at least two wheels (34) of each group of wheels (26) come into contact with respective ones of the two rings.

7. A stator according to claim 6, in which the two rings (30a, 30b) are provided with lateral ribs (32a, 32b) facing one another, and in which said groups of wheels (26) comprise double-cone wheels (34) in engagement with said lateral ribs.

8. A stator according to any one of claims 1 to 7, in which said rail (24) comprises a single ring secured to said casing (11) and in which the wheels of each group of wheels come into contact with said ring, on either side thereof.

9. A stator according to any one of claims 1 to 8, in which said actuator ring (18) is made of a composite material based on carbon fibers.

10. A compressor including a stator according to any one of claims 1 to 9.

11. A turbomachine including a stator according to any one of claims 1 to 9.

## Patentansprüche

1. Stator einer Turbomaschine, umfassend ein Gehäuse (11) sowie wenigstens eine Stufe von Leitschaufeln (12) mit variabler Einstellung, wobei die Schaufeln durch einen außerhalb des Gehäuses befindlichen und von diesem getragenen Betätigungskranz (18) bewegt werden, und wobei der Kranz durch Schwingarme (16) mit den Schaufeln (12) verbunden ist, um sie gleichzeitig zu betätigen, **dadurch gekennzeichnet, daß** das Gehäuse (11) eine feste, an der Außenseite des Gehäuses vorspringende koaxiale Schiene (24) aufweist, daß wenigstens drei in Umfangsrichtung beabstandete Laufrollengruppen (26) gezwungen sind, sich entlang der Schiene zu bewegen, daß jede Laufrollengruppe (26) durch eine Radialführungsanordnung mit dem Kranz (18) gekoppelt ist, und daß jede Laufrollengruppe (26) wenigstens zwei mit der Schiene (24) in Eingriff befindliche Laufrollen (34) aufweist, wobei jede Laufrolle (34) um eine radial ausgerichtete Achse (36) drehbar angebracht ist, wobei jede Laufrolle sich auf ihrer Achse radial verschieben läßt, wobei diese Achse an dem Kranz befestigt ist.

2. Stator einer Turbomaschine, umfassend ein Gehäuse (11) sowie wenigstens eine Stufe von Leitschaufeln (12) mit variabler Einstellung, wobei die Schaufeln durch einen außerhalb des Gehäuses befindlichen und von diesem getragenen Betätigungskranz (18) bewegt werden, und wobei der Kranz durch Schwingarme (16) mit den Schaufeln (12) verbunden ist, um sie gleichzeitig zu betätigen, **dadurch gekennzeichnet, daß** das Gehäuse (11) eine feste, an der Außenseite des Gehäuses vorspringende koaxiale Schiene (24) aufweist, daß wenigstens drei in Umfangsrichtung beabstandete Laufrollengruppen (26) gezwungen sind, sich entlang der Schiene zu bewegen, daß jede Laufrollengruppe (26) durch eine Radialführungsanordnung mit dem Kranz (18) gekoppelt ist, und daß jede Laufrollengruppe (26) wenigstens zwei mit der Schiene (24) in Eingriff befindliche Laufrollen (34) aufweist, wobei jede Laufrolle um eine radial ausgerichtete Achse (36) drehbar angebracht ist und jede Laufrolle (34) mit ihrer Achse (36) fest verbunden ist, wobei diese Achse in einer in dem Kranz (18) ausgebildeten Bohrung (40) verschieblich angebracht ist, so daß die Laufrolle und die Achse sich gemeinsam radial zum Kranz verschieben lassen.

3. Stator nach Anspruch 2, wobei zwischen der Bohrung (40) und der Achse (36) ein Gleitlager vorgesehen ist, um das Verschieben der Achse zu erleichtern.

4. Stator nach Anspruch 2, wobei zwischen der Bohrung (40) und der Achse (36) ein Wälzlager angeordnet ist, um das Verschieben der Achse zu erleichtern.

5. Stator nach einem der Ansprüche 1 bis 4, wobei zwischen jeder Laufrolle (34) und deren Achse (36) ein Wälzlagersystem angeordnet ist.

6. Stator nach einem der Ansprüche 1 bis 5, wobei die Schiene (24) aus zwei mit dem Gehäuse (11) fest verbundenen parallelen Ringen (30a, 30b) besteht und wobei die wenigstens zwei Laufrollen (34) einer jeden Laufrollengruppe (26) jeweils mit den beiden Ringen in Kontakt kommen.

7. Stator nach Anspruch 6, wobei die beiden Ringe (30a, 30b) mit einander gegenüberliegenden seitlichen Rippen (32a, 32b) versehen sind und wobei die Laufrollengruppen (26) doppelkegelförmige Laufrollen (34) umfassen, die mit den seitlichen Rippen in Eingriff sind.

8. Stator nach einem der Ansprüche 1 bis 7, wobei die Schiene (24) aus einem einzigen Ring besteht, der mit dem Gehäuse (11) fest verbunden ist, und wobei die Laufrollen einer jeden Laufrollengruppe auf beiden Seiten des Rings mit diesem in Kontakt kommen

9. Stator nach einem der Ansprüche 1 bis 8, wobei der Betätigungskranz (18) aus einem Verbundwerkstoff auf Basis von Kohlenstoffasern besteht.

10. Verdichter, der einen Stator nach einem der Ansprüche 1 bis 9 umfaßt.

11. Turbomaschine, die einen Stator nach einem der Ansprüche 1 bis 9 umfaßt.
